Europäisches Patentamt

(19) European Patent Office

Office européen des brevets

(11) Publication number: **0 107 102**
**A1**

(12) # EUROPEAN PATENT APPLICATION

(21) Application number: **83109775.3**

(22) Date of filing: **29.09.83**

(51) Int. Cl.³: **F 16 F 9/43,** B 23 K 11/32

---

(30) Priority: **29.09.82 US 426279**

(43) Date of publication of application: **02.05.84**
**Bulletin 84/18**

(84) Designated Contracting States: **BE DE FR GB IT SE**

(71) Applicant: **RWC INC., 2105 S.Euclid Avenue, Bay City Michigan (US)**

(72) Inventor: **Wilson, George S., 3349 S. Point Au Gres Road, Au Gres, Michigan 48703 (US)**
Inventor: **Richardson, Ronald W., 1048 Applin Beach, Bay City, Michigan 48706 (US)**

(74) Representative: **Tetzner, Volkmar, Dr.-Ing. Dr. Jur., Van-Gogh-Strasse 3, D-8000 München 71 (DE)**

---

(54) **Apparatus and methods for supplying gas under pressure to weldable shock absorber casings having an opening pierced therein, and like products, and weld-sealing the opening.**

(57) A method and apparatus for supplying gas under pressure to a weldable shock absorber chamber having a specially configured opening pierced in the external casing wall thereof and like products, and weld-sealing the opening wherein an opening is pierced in the casing wall which causes the marginal wall surrounding the opening to form a weld ball supporting seat, a welding head and weld ball supplying assembly having a lower end with a seal surrounding a ball dispensing opening engages the marginal wall of the product, gas under pressure is fed to the pierced opening in the casing, operating elements separate individual balls from a supply thereof and furnish only one at a time to a ball receiving chamber in said assembly, a raisable and lowerable welding electrode moves axially in the ball receiving chamber and ball dispensing opening to engage a ball dispensed from said ball receiving chamber through said dispensing opening to the seat, a welding current supply is applied to the electrode to melt-collapse the ball to seal the pierced opening after the fluid has been charged thereto, and mechanism keeps the electrode in current conducting contact with the collapsing ball while welding current is being applied.

1

APPARATUS AND METHODS FOR SUPPLYING GAS UNDER
PRESSURE TO WELDABLE SHOCK ABSORBER CASINGS
HAVING AN OPENING PIERCED THEREIN,  AND LIKE
 PRODUCTS, AND WELD-SEALING THE OPENING

The automotive supply industry has long needed an economical, gas pressurized shock absorber for the after market, and the present invention is directed to apparatus and methods for supplying a low pressure gas, such as nitrogen, under pressure, to the shock absorber oil chamber through an opening pierced in the closed chamber.  In the multiple stage process to be described, after the gas is supplied via the isolated opening, a metallic ball is fed individually to the opening by apparatus which reliably injects only one ball at a time, and then welds the ball in position to seal the opening.

Shock absorbers of this type have a reduced ride control loss resulting from the aeration of shock absorber fluid because the nitrogen under pressure keeps air and other gases in solution within the shock absorber oil, rather than allowing foam to form and cause loss of control.  The units, further, remain cooler which again means more control, and

2

improved handling of the vehicle as a result. Still further, such shock absorbers better handle the road inputs being transmitted through them, and a less harsh ride with less noise can be obtained with such shock absorbers, without detracting from other important ride criteria.

One of the problems which needed to be resolved in order to manufacture such shock absorbers on a high production, economical basis was to design efficient and reliable machinery which was not available, and had to be developed for the purpose of supplying the gas under pressure to the closed oil chamber and thereafter sealing the casing; all without any material loss of pressure.

In the past, apparatus has been developed for sealing such products as aerosol cans and light bulbs, for instance, but none of this apparatus which is exemplified in U. S. patents 284,674, 1,504,088, 1,708,868, 2,380,811 and 3,247,640 were deemed suited to the high production and reliability requirements of the manufacturer. As indicated, it is necessary that there be a positive gas seal during the manufacturing operation contemplated, and only one welding ball must be supplied at a time to a pierced opening which is particularly configured to receive it. When the ball is welded in position it collapses,

3

and there must be provision for maintaining a welding pressure on the collapsing ball to achieve a proper weld. The device must, further, be so controlled that there is no weld expansion into the casing which can fragment-off and contaminate the oil in the oil chamber of the shock absorber.

With the foregoing in mind, it is a prime object of the present invention to provide a reliable, high production machine and method for performing the functions described in a manner which avoids complexity to the extent possible, and which is trouble-free in nature in view of the high production rates which are necessary.

It is a further object of the invention to provide for the piercing of an opening of predetermined configuration in the casing wall and to transfer only one ball to that opening from a supply thereof, in a position to be welded in place while the apparatus maintains a seal around the opening.

An apparatus and method have been developed in which a sealing and electrically isolating housing reciprocably mounts a welding rod and a ball selecting mechanism operates sequentially with the rod to supply only a single ball to the opening punched in the casing in a positive manner from a side passage, there being a stripper feeder system for receiving a

4

ball from a supply tube containing a plurality of such welding balls and feeding the ball to the passage in which the welding electrode operates.

Other objects and advantages of the invention will be pointed out specifically, or will become apparent from the following description when it is considered in conjunction with the appended claims and the accompanying drawings.

Figure 1 is an enlarged, sectional fragmentary view of one end of a typical two tube gas pressurized shock absorber of the type which has been described;

Figure 2 is an enlarged view, illustrating the configuration of the opening punched in the cylindrical outer casing of the oil chamber of the shock absorber, immediately prior to the time the apparatus to be described supplies the gas under pressure thereto and welds a ball in position;

Figure 3 is a similar view showing the ball which has been supplied to the opening, and the welding electrode which has been brought into contact with the ball;

Figure 4 is a partly sectional, elevational view of the apparatus for supplying the gas and the welding ball, and for welding the ball in position to afterward seal the opening through which the gas is supplied; and

Figure 5 is a schematic view of an electrical control circuit for the machinery to be more particularly described.

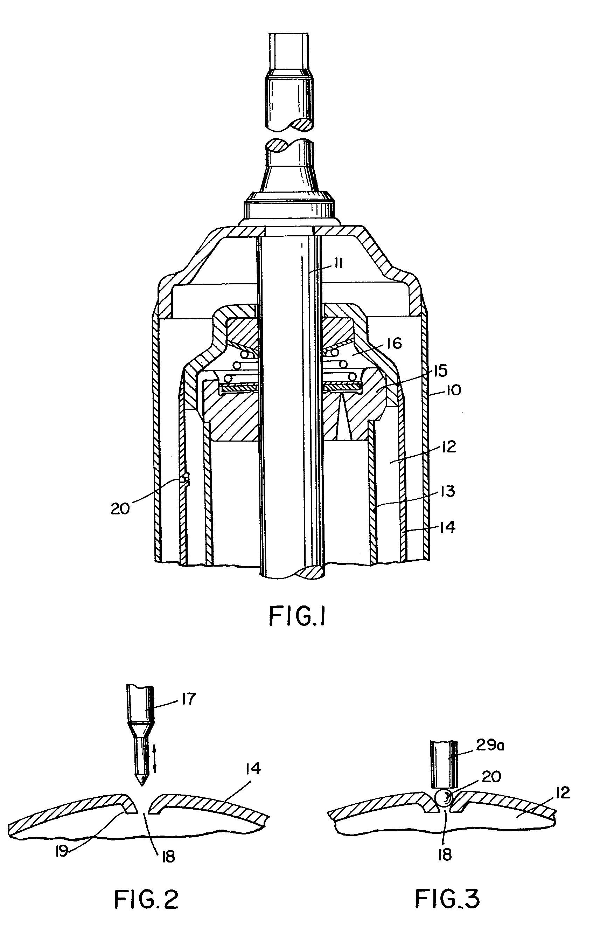

In Figure 1, a shock absorber of the type indicated is shown, which embodies an outer casing 10, mounting rod 11. Surrounding rod 11 is the closed oil chamber 12 made up of cylindrical steel casings 13 and 14 and ends 15 (only one of which is shown). End seals such as at 16 are provided for rod 11.

In practice, in the construction of the shock absorber, a fluid under pressure, such as nitrogen gas, is to be supplied under pressure to the chamber 12 which contains a shock absorber fluid such as oil. In order to accomplish this, according to the invention described herein, a reciprocable piercing tool 17 (Figure 2) is provided to punch a gas charge-injecting opening 18 in outer chamber casing 14 before the unit is assembled within the shock absorber casing 10. The punching operation results in an inwardly turned, somewhat frustoconical seat 19, as indicated in Figure 2. As indicated in Figure 3, the configuration 19 and opening 18 are gauged such that a steel welding ball 20, typically 3/32 of an inch in diameter, can be received in the opening 18 in the manner disclosed in Figure 3. The tool 17 may be powered by a double-acting, fluid pressure operated ram cylinder

6

(such as shown at 17a in Figure 5), the machine being supported by framing F at a first station.

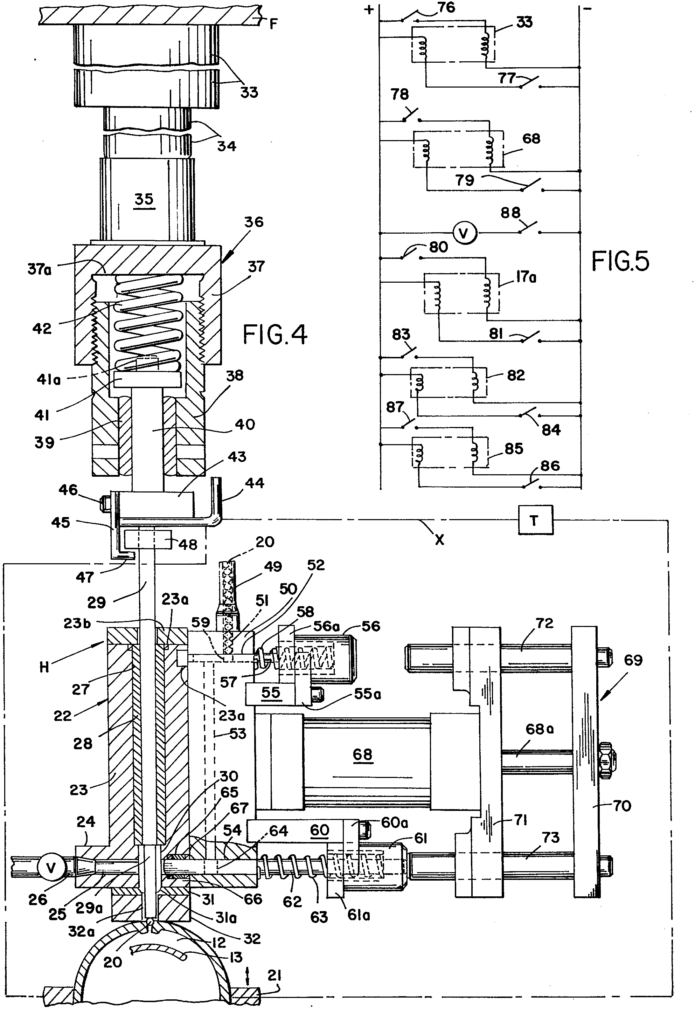

The apparatus for supplying the nitrogen or other gas to chamber 12 is more particularly disclosed in Figure 4 and may be supported by the same framing F at a second adjacent, downstream operating station. As this figure indicates, a reciprocable semi-cylindrical product holder 21 operated by a vertical air cylinder connected with the machine frame, or the like, may be provided for supporting the oil chamber device vertically relative to a reciprocable welding head, generally designated H. The ram cylinder mounted head H includes an electrode housing, generally designated 22, comprising a vertical fitting 23 with a lower end projection 24 which has a lateral passage 25 communicating with a gas supplying hose 26, leading to a source of gas supply. Nitrogen gas has been used for various reasons, and one of these is that it is inert and not flammable, and will not be affected by, and will not affect, the welding operation which is to be described.

The fitting 23 includes a central opening 27 within which an elongate gas-sealing slide bushing 28 is received for reciprocably mounting a welding electrode rod 29, having a reduced diameter lower end 29a. A reduced size orifice 30, constituting a ball and gas receiving chamber, is provided in continuation

7

of opening 27 and opens through the bottom of fitting 23 to a seal mounting ring 31 to which a flexible resilient seal ring 32 may be adhesively, or otherwise suitably secured. The opening 31a in a ring 31 is adequate in diameter to freely pass the lower end 29a of welding rod 29, as is the opening 32a in the seal ring 32. The chamber 30 is axially disposed to pass electrode rod 29 and is closed at its upper end by bushing 28. At its upper end the housing 23 is provided with a seal ring 23a for bushing 28, and is closed by a ring cap 23b.

Mounted on the frame F of the machine is a fluid pressure operated, double acting air cylinder 33, which supplies welding pressure to the welding electrode 29 and operates to retract it, cylinder 33 having a piston rod 34 connected by a member 35 to an adjustable spring housing coupling 36, comprised of an upper cap 37 threadably, and therefore adjustably, receiving a lower housing member 38. Slide bushing 39, carried by the member 38, receives a plunger member 40 having a spring supporting seat 41 with a spring retainer 41a, around which a coil spring 42, which bears against the face 37a of member 37, is disposed.

Plunger 40 carries an insulating block member 43 to which a conductive welding current

8

receiving terminal strap 44 is secured, and it is strap 44 which engages the upper end of welding electrode 29. For a purpose to be later described, an angle-shaped, electrically non-conductive strap 45 is secured as at 46 to block 43, to depend therefrom, and bar 45 has a lower leg 47 which cooperates with a ring 48 provided on the upper end of welding rod 29 to act as a lift bar when the welding electrode 29 is to be returned to an inoperative position.

The welding balls 20 are supplied from a hopper (not shown) via a flexible tube 49, mounted on a ball stripping and transfer mechanism 50 (secured to housing 22 at one side) which includes a passage 51 extending vertically from tube 49 to an upper lateral passage 52. Passage 52 leads to a vertical passage 53, which, in turn, leads to a lower lateral passage 54 extending completely through the lower end of the block member which comprises the mechanism 50.

The passages 52, 53 and 54 are all of such diameter as to permit the passage of only a single welding ball 20. Mounted on the upper end of block 50 is a support bracket 55 with a slide saddle 55a for slidably supporting a cylindrical ball stripper head section 56 having a forwardly extending, reduced size stripper plunger 57 thereon, and also mounting a stop 56a which engages saddle 55a to

0107102

9

locate the retracted position of plunger 57. A spring 58 normally biases the ball feeding rod 57 outwardly to the position shown in Figure 4. It is to be noted that rod 57 has a through opening or port 59 which will pass one of the welding balls 20 to passage 53, when the plunger 57 is moved forwardly to vertically align port 59 with passage 53.

At the lower end of block 50, a bracket 60 has a saddle 60a which similarly reciprocably mounts a similar plunger head section 61, having a similar forwardly extending, reduced diameter stripper or transfer plunger 62 thereon. Stop 61a on plunger 62 engages saddle 60a to locate the retracted position of plunger 62. A spring 63 surrounding pusher rod 62 normally urges plunger 62 outwardly. The rod 62 similarly has a through opening or port 64 and it will be obserbed that the rod 62 is of such length as to extend into a lateral opening 65 in block 23, which communicates with the chamber 30.

A suitable slide bushing 66, with sealing O-rings 67, is provided in housing 23 to slidably accommodate the front end of rod 62. To actuate plungers 57 and 62, an air cylinder 68, fixed to block 50, has its piston rod 68a connected with a striker frame, generally designated 69, and comprising plates 70 and 71 which support an upper striker rod 72 and

10

a lower striker rod 73, each of which is in axial alignment with one of the sections 56 and 61. Plainly, when piston rod 68a is retracted, rod 73 is brought into abutting engagement with the plunger head section 61 to cause it to move forwardly into passage 25 to a position in which port 64 aligns with chamber 30 and a ball 20 is dropped into the chamber 30, spring 63 being compriessed at this time by plate 61a. A short time thereafter, striker rod 72 contacts plunger head member 56 to move rod 57 from the position shown over to dispose the port 59 in axial alignment with the passage 53. It is to be noted that block 23 is recessed as at 23a to receive the front end of plunger 57.

Finally, it is to be noted that the secondary of a welding transformer T is connected in a series circuit x with power supply bar 44 and the tube holder 21. In Figure 5, the extend and retract solenoids of cylinder 33 are operated by switches 76 and 77 respectively. The extend and retract solenoids of cylinder 68 are operated by switches 78 and 79 respectively. The extend and retract solenoids of cylinder 17a are operated by switches 80 and 81 respectively, and the extend and retract solenoids of cylinder 82 for raising and lowering holder 21 are operated by switches 83 and 84. The extend and retract solenoids of the cylinder 85 are operated by switches 86 and 87 and all of the switches

11

in Figure 5 may be cam or otherwise controlled.

In operation, and with the head H and welding electrode 29 in retracted position, the shock absorber casing holder 21 may be first moved upwardly by way of double-acting air cylinder 82 (Figure 5) to hold the shock absorber casing. Then head H is lowered via cylinder 85 to dispose the pre-punched opening 18 in axial alignment with the opening 32a in seal 32.

At this point, a suitable gas valve V (such as a solenoid operated valve) in line 26 is opened to admit nitrogen, or another suitable, gas under pressure to the port 25 to proceed on into the interior of chamber 12, until the desired volume of gas is added. After a short time delay to accomplish filling (after which valve V closes), cylinder 68 is energized to retract piston rod 68a and this causes striker 73 to move the feeder rod 62 forwardly from the position shown in Figure 4 to deliver a ball 20 previously deposited in port 64, via the chamber 30 and opening 32a, to a seated position in seat 19. Shortly thereafter, striker 72 engages the head 56 of rod 57 to move it forwardly to deliver a ball 20 from passage 59 to the passage 53 from which it drops until it comes into contact with the upper surface of rod 62. Since only one ball 20 can drop into passage 59 at any time, and the chute 51 is displaced from passage 53 and sealed

12

from it, there is no possibility of more than one ball 20 at a time ever being delivered. Once delivery is accomplished, cylinder 68 can be operated to extend rod 68a and striker frame 69, and spring 58 and 63 will be freed to restore plungers 57 and 62 to the Figure 4 position. When the rod 62 reaches original position, the ball which has been awaiting it in vertical passage 53 drops into the port 64 ready for initiation of the next cycle of the machine.

Cylinder 33 is then operated to extend piston rod 34 and force electrode 29 from a position in which its lower end is above the level of passage 54, down to a position in engagement with the ball 20 to be welded. At the time electrode 29 has descended, welding current is supplied through terminal strap 44. As the cylinder 33 continues to exert force against the piston rod 34, spring 42 acts to continue to urge rod 29 downwardly and, as the ball 20 being welded collapses, rod 29 follows it to maintain the welding contact until the opening sealing weld is completed. Then head H is raised by cylinder 85 and piston rod 34 is retracted by cylinder 33 via lifting bar 47 to original position, and the cylinder 82 can be activated to lower holder 21.

Because of the lifter bar 47 construction, it is possible to readily remove and replace the

0107102

13

electrode, as necessary. The weld effected is a direct current weld, with the spring 42 retaining pressure on the electrode 29a to instantaneously follow the collapsing ball, and does not depend on activation of an air cylinder. The latter would introduce a time lag which would cause arcing, and interfere with satisfactory welding. With the device indicated, a trouble-free operation is provided which assures that only one ball at a time can be supplied to this thin wall tubing.

It is to be understood that the drawings and descriptive matter are in all cases to be interpreted as merely illustrative of the principles of the invention, rather than as limiting the same in any way, since it is contemplated that various changes may be made in various elements to achieve like results without departing from the spirit of the invention or the scope of the appended claims.

0107102

15

CLAIMS:

1. Apparatus for supplying fluid under pressure to a weldable shock absorber chamber having a specially configured opening pierced in the external casing wall thereof and like products, and weld-sealing the opening, comprising:

(a) support framing;

(b) mechanism supported thereon for piercing an opening in the casing wall which causes the marginal wall surrounding the opening to assume a convergent tubular generally frustoconical configuration forming a weld ball supporting seat;

(c) a welding head and weld ball supplying assembly on said framing having a lower end with a seal surrounding a ball dispensing opening therein which communicates with a ball receiving chamber in said assembly, and a product holder in axial alignment therewith;

(d) means for relatively axially moving said assembly and holder to dispose the seal in abutting sealing relation with the product;

16

(e)     supply mechanism for supplying fluid under pressure to said assembly to communicate with the ball dispensing opening and the pierced opening in the casing sealed by the seal to provide fluid thereto;

(f)     operating elements carried by said assembly and communicating with said ball receiving chamber to separate individual balls from a supply thereof and furnish only one at a time to said ball receiving chamber;

(g)     a raisable and lowerable welding electrode carried by said assembly to move axially in said ball receiving chamber and ball dispensing opening to engage a ball dispensed from said ball receiving chamber through said dispensing opening to the seat;

(h)     a welding current supply circuit connected to said electrode to supply a welding current to the lower end thereof and melt-collapse the ball to seal the pierced opening after the fluid has been charged thereto;   and

(i)     means for keeping said electrode in current conducting contact with the collapsing ball.

2.     The apparatus of claim 1 wherein said operating elements for furnishing a ball comprise a vertically disposed, open bottom tube with balls therein, a pair of vertically spaced lateral passages with the lower one communicating with said

17

ball receiving chamber, there being a vertical passage communicating with the lateral passages; an upper and lower plunger valve for said passages, each having a ball accommodating through port therein interjacent its end sized to receive only a single ball; and lost motion drive means is provided for first operating the lower plunger valve to move a ball in its port to the ball receiving chamber, and only after a time delay, when the port in said lower plunger valve has moved beyond said vertical passage, operating the upper plunger valve to move a ball received in its port from said tube over to said vertical passage.

3.      The apparatus of claim 2 in which said lost motion drive means comprises striker means in alignment with each of said plunger valves.

4.      The apparatus of claim 3 in which spring means is provided in association with said plunger valves to return the lower plunger to a position in which its port is vertically aligned with said vertical passage and the upper plunger valve to a position in which its port is vertically aligned with said vertical tube.

5.      The apparatus of claim 4 in which the lower plunger valve extends in the return direction further than the upper plunger valve and said striker means comprises a striker frame operated by a fluid pressure powered ram cylinder.

18

6.     The apparatus of claim 1 in which said means for keeping said electrode in current conducting contact include a vertically extendible and retractable fluid pressure operated ram cylinder with an extensible portion; a coupling between said extensible portion and electrode permitting relative movement between the coupling and electrode;  and means constantly urging said electrode downwardly to permit it to follow the collapsing ball during the welding operation, and maintain current conducting contact with it.

7.     The apparatus of claim 6 in which said coupling carries an electrically insulated plunger with a current receiver thereon engaging said electrode; and said constant urging means comprises a spring urging said coupling plunger and electrode continuously downwardly.

8.     The apparatus of claim 7 in which said coupling carries a lifter bar and said electrode has a part at its upper end extending to overlie said lifter bar so that said electrode will be retracted by the lifter bar upon retraction of the extensible portion.

9.     The apparatus of claim 8 in which said operating elements for furnishing a ball includes a vertically disposed tube with balls in vertical single file therein, which is open at its lower end;  and a stripper element system for removing only the lowermost ball with each actuation and isolating the lower end of the vertical tube at the same time, prior to pushing a ball into the ball receiving chamber.

10. The apparatus of claim 1 in which means slidably accommodating said electrode closes off the upper end of said ball receiving chamber; and said fluid supply mechanism comprises a non-flammable gas supply leading into the ball receiving chamber.

11. The apparatus of claim 1 in which said circuit is a DC series circuit.

12. A method for supplying fluid under pressure to a weldable shock absorber chamber having a specially configured opening pierced in the external casing wall thereof and like products, and weld-sealing the opening, comprising the steps of:

(a) piercing an opening in the casing wall which causes the marginal wall surrounding the opening to assume a convergent tubular generally frustoconical configuration forming a weld ball supporting seat;

(b) relatively axially moving a product holder and a welding head and weld ball supplying assembly having a lower end with a seal surrounding a ball dispensing opening therein which communicates with a ball receiving chamber in said assembly to dispose the seal in abutting sealing relation with the product;

20

(c)     supplying fluid under pressure to said assembly to communicate with the ball dispensing opening and the pierced opening in the casing sealed by the seal to provide fluid thereto;

(d)     separating individual balls from a supply thereof and furnishing only one at a time to said ball receiving chamber;

(e)     moving a raisable and lowerable welding electrode carried by said assembly axially in said ball receiving chamber and ball dispensing opening to engage a ball dispensed from said ball receiving chamber through said dispensing opening to the seat;

(f)     applying a welding current to said electrode to melt-collapse the ball to seal the pierced opening after the fluid has been charged thereto;   and

(g)     moving said electrode to keep it in current conducting contact with the collapsing ball.

13.     The method of claim 12 wherein said fluid is a non-flammable gas such as nitrogen.

14.     The method of claim 13 wherein the welding current is a direct current.

15.     The method of claim 12 wherein said balls are separated from a vertical single file supply by first accommodating the lowermost ball in an underlying stripper element port sized to accommodate only one ball, and moving the stripper element from the

21

vicinity of the supply to a discharge position while isolating the lower end of the supply.

16.     The method of claim 15 wherein the stripper element delivers the ball to a vertical passage, and on to an underlying port sized to accommodate only one ball in a second stripper element, and moving the second element to discharge the ball to the ball receiving chamber and seat.

17.     The method of claim 16 wherein the stripper elements are actuated in sequence with the second stripper element moving to discharge a ball first of all and the first stripper element then being operated to deliver a second ball to the vertical passage to await the return of the port in the second stripper element.

FIG.1

FIG.2

FIG.3

0107102

2 / 2

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | EP-A-0 095 552 (MONROE AUTO EQUIPMENT) <br> * Whole document * | 1-17 | F 16 F 9/43 <br> B 23 K 11/32 |
| X | DE-B-1 196 020 (BOGE) <br> * Column 2 * | 1-16 | |
| A | CH-A- 421 721 (STABILUS) | | |
| A | FR-A- 821 182 (THOMSON-HOUSTON) | | |
| A | FR-A-2 384 199 (TOKICO) | | |

--- 

TECHNICAL FIELDS SEARCHED (Int. Cl. ³)

F 16 F
B 23 K

The present search report has been drawn up for all claims

| Place of search | Date of completion of the search | Examiner |
|---|---|---|
| THE HAGUE | 13-01-1984 | HOORNAERT W. |